# DEMANDE DE BREVET EUROPEEN

(11) **EP 4 733 854 A1**
(43) Date de publication de la demande: **29.04.2026**
(21) Numéro de dépôt: 24208207.1
(22) Date de dépôt: 22.10.2024
(51) Int. Cl.: G04B 1/16, G04B 17/06, G04B 13/02, G04D 3/02, G04D 3/00, B23D 37/20

(54) **PROCÉDÉ DE RÉALISATION D'UN ARBRE DE BARILLET**

(71) Demandeur: Nivarox-FAR S.A., 2400 Le Locle (CH)
(72) Inventeur: MOREL, Dorian, 25210 Bonnétage (FR); HAFELI, Frédéric, 2720 Tramelan (CH)
(74) Mandataire: ICB SA

(57) **Abrégé**

La présente invention concerne un procédé de fabrication d'un arbre de barillet (1) d'horlogerie agencé pour pivoter autour d'un axe de pivotement (D) et comprenant une bonde (3) comprenant une surface d'appui (30) pour une spire intérieure d'un ressort, surface d'appui (30) de laquelle fait saillie un crochet (2) destiné à être engagé dans un oeillet de ladite spire intérieure, le crochet (2), et comprenant une surface d'extrémité (20) servant d'appui à l'œillet lors de l'armage du ressort, la bonde (3) comprenant, en amont du crochet (2) dans le sens d'enroulement (S) du ressort, un dégagement (4) destiné à recevoir l'extrémité du ressort, le procédé comprenant les étapes suivantes :
- se munir d'une barre ;
- décolleter la barre pour former au moins une portion cylindrique (13) comprenant un surface verticale et une surface horizontale ;
- usiner la portion cylindrique (13) pour former la bonde qui comprend le crochet (2), la surface d'appui (3) et le dégagement (4), simultanément via un outil de brochage en effectuant plusieurs allers-retours en translation dans la direction de l'axe de pivotement (D) de l'arbre.

## Description

### Domaine technique de l'invention

L'invention se rapporte à un procédé de fabrication d'un arbre de barillet d'horlogerie pivotant autour d'un axe de pivotement et comportant un crochet pour l'accrochage d'une spire intérieure d'un ressort de barillet dans un sens d'enroulement unique, et comportant sur une première partie de sa périphérie au niveau du crochet et en aval du crochet dans le sens d'enroulement, une surface d'appui de ressort courbe pour l'appui de la spire intérieure.

### Arrière-plan technologique

Dans un mouvement horloger mécanique, le barillet est l'organe moteur qui apporte l'énergie nécessaire au déplacement des différents composants. Le barillet comprend un tambour, un couvercle fermant le tambour, un arbre de barillet autour duquel pivotent librement le tambour et le couvercle, et un ressort de barillet logé dans le tambour. La spire extérieure du ressort moteur est maintenue par la paroi du tambour. L'arbre de barillet comprend une partie appelée bonde qui porte un crochet auquel est attachée la spire intérieure du ressort de barillet. L'arbre de barillet est solidaire en rotation d'un rochet et, par l'intermédiaire de ce rochet, peut être entraîné en rotation par une tige de remontoir (remontage manuel) ou une masse oscillante (remontage automatique) du mouvement pour armer le ressort moteur et accumuler ainsi de l'énergie.

L'arbre d'un barillet horloger est un composant de petites dimensions qui est soumis à d'importants efforts, ce qui exige une réalisation particulièrement soignée. Sa géométrie rend son usinage généralement assez coûteux, notamment à cause de la présence du crochet, qui nécessite des usinages sur tout son pourtour, pour d'une part assurer le bon accrochage du ressort, et d'autre part pour assurer le montage de l'œillet de ce ressort avec un jeu suffisant.

Habituellement, l'arbre de barillet est usiné via plusieurs opération de fraisage. Cependant, certains angles sont difficiles à obtenir au moyen des fraises couramment utilisées, les rayons de fraise étant trop grands.

Un but de la présente invention est par conséquent de proposer un procédé de fabrication plus simple et nécessitant moins d'étapes pour la fabrication de l'arbre de barillet.

### Résumé de l'invention

A cet effet, la présente invention concerne un procédé de fabrication d'un arbre de barillet d'horlogerie agencé pour pivoter autour d'un axe de pivotement comprenant une bonde comprenant une surface d'appui pour une spire intérieure d'un ressort, surface d'appui de laquelle fait saillie un crochet destiné à être engagé dans un oeillet de la spire intérieure, la bonde comprenant également, en amont du crochet dans le sens d'enroulement du ressort, un dégagement destiné à recevoir l'extrémité du ressort.

Selon l'invention, le procédé comprend les étapes suivantes :
- se munir d'une barre ;
- décolleter la barre pour former au moins une portion cylindrique comprenant un surface verticale et une surface horizontale ;
- usiner la portion cylindrique pour former la bonde qui comprend le crochet, la surface d'appui, et un dégagement simultanément via un outil de brochage en effectuant plusieurs allers-retours en translation dans la direction de l'axe de pivotement de l'arbre.

Conformément à d'autres variantes avantageuses de l'invention :
- les aller et retour sont effectués par passe de 0.2 mm ;
- la surface d'appui du ressort comprend un secteur de section hélicoïdale et un secteur de section cylindrique ;
- le dégagement présente une surface courbe ;
- le matériau de l'arbre est choisi parmi les métaux ou les alliages métalliques ;
- la surface verticale pour former le crochet et la surface d'appui courbe sont usinés simultanément par le même outil de brochage ;
- l'outil de brochage est outil de forme présentant une forme de découpe identique à la forme désirée de l'arbre de barillet.

L'invention concerne aussi un arbre de barillet obtenu par le biais du procédé conforme à l'invention.

### Description sommaire des dessins

D'autres caractéristiques et avantages de l'invention apparaîtront à la lecture de la description détaillée qui va suivre, en référence aux dessins annexés, où :
- la figure 1 est une vue en perspective d'un arbre de barillet selon l'invention ;
- la figure 2 est une vue en coupe selon le plan P de l'arbre de la figure 1 ;
- les figure 3 à 5 représentent des étapes du procédé de fabrication de l'arbre de barillet ;
- les figures 6a et 6b représentent, de façon schématisée, l'outil de coupe servant à usiner l'arbre de barillet ;
- la figure 7 représente, de façon schématisée, l'outil d'usinage positionné sur l'arbre de barillet à usiner.

### Description détaillée de l'invention

L'invention concerne la fabrication d'un arbre de barillet 1 d'horlogerie comportant un crochet 2 pour l'accrochage d'une spire intérieure d'un ressort de barillet dans un sens d'enroulement S unique.

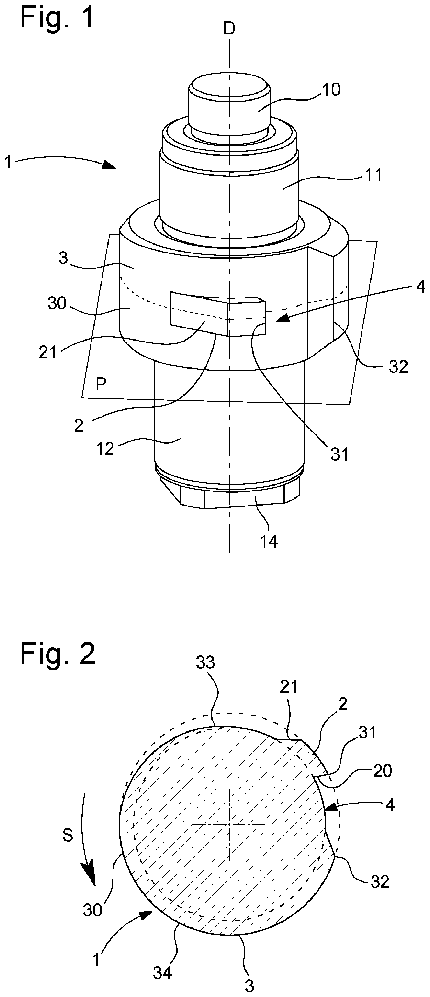

En référence aux figures 1 et 2, un arbre de barillet 1 selon l'invention comprend au moins un pivot 10 pour son pivotement dans un palier d'un mouvement horloger autour d'un axe D, une portion de section carrée 14 sur laquelle peut être monté un rochet, deux portions cylindriques 11, 12 pour le pivotement, respectivement, d'un tambour et d'un couvercle de barillet, et une bonde 3. La bonde 3 porte un crochet 2 pour la fixation de la spire intérieure d'un ressort de barillet (non représenté sur les figures) en spirale logé dans le tambour. Le sens d'enroulement du ressort est représenté à la figure 2 par la flèche S.

Plus particulièrement, la bonde 3 comprend une surface d'appui 30 pour le ressort de barillet, sur laquelle est situé le crochet 2. Cette surface d'appui 30 s'étend, dans le sens d'enroulement S du ressort de barillet, d'une première arête 31 à une seconde arête 32. La bonde 3 comprend aussi, en amont du crochet 2, un dégagement 4 pour recevoir l'extrémité intérieure du ressort de barillet, et qui joint les première et seconde arêtes 31, 32.

Le crochet 2 est destiné à être engagé dans un oeillet ou une fenêtre de la spire intérieure du ressort de barillet pour lui permettre d'être entouré sur tout son pourtour par la paroi de l'œillet. Le crochet 2 comprend deux surfaces d'extrémité opposées 20, 21. Dans le sens d'enroulement S, la surface d'extrémité 20 est située en amont de la surface d'extrémité 21 et au niveau de la première arête 31. Cette surface d'extrémité 20 sert d'appui à la paroi de l'œillet lorsque le ressort est armé. Telle que visible sur les figures, la surface plane d'extrémité 20 est inclinée, dans le sens de son extension depuis l'axe de pivotement D, vers l'amont dans le sens d'enroulement S pour une meilleure tenue du ressort de barillet sur le crochet 2.

En ce qui concerne le dégagement 4, ce dernier présente une surface avec un profil courbe. La surface du dégagement pourrait toutefois avoir une autre forme, comme une surface plane par exemple.

Dans l'exemple illustré sur les figures, la surface d'appui 30 est composée d'une première partie 33 s'étendant depuis la première arête 31 et dont le rayon croît dans le sens d'enroulement S, et d'une deuxième partie 34 s'étendant de la première partie 33 à la seconde arête 32 et dont le rayon est constant.

La surface d'appui 30 comprend ainsi au moins un secteur de section hélicoïdale où la surface d'appui de ressort 3 comporte, depuis le crochet 2 et dans le sens d'enroulement S, un secteur de section hélicoïdale 33, puis un secteur de section cylindrique 34. Pour accompagner le développement de la spire interne du ressort de barillet, la surface d'appui de ressort 3 présente donc un rayon croissant dans le sens d'enroulement S.

On comprend que l'exécution du dégagement 4, le crochet 2 et la surface d'appui 30 du ressort, avec un outil unique, est avantageuse à la fois en termes de coûts et de temps.

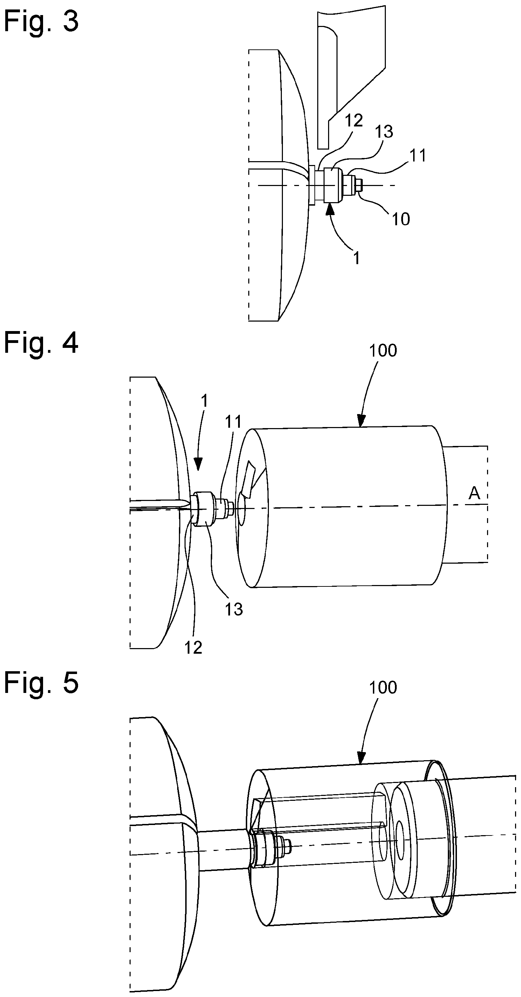

La figure 5 illustre l'usinage simultané du dégagement 4, du crochet 2 et de la surface d'appui 30 avec un même outil de brochage translatant selon un axe A coaxial à l'axe D.

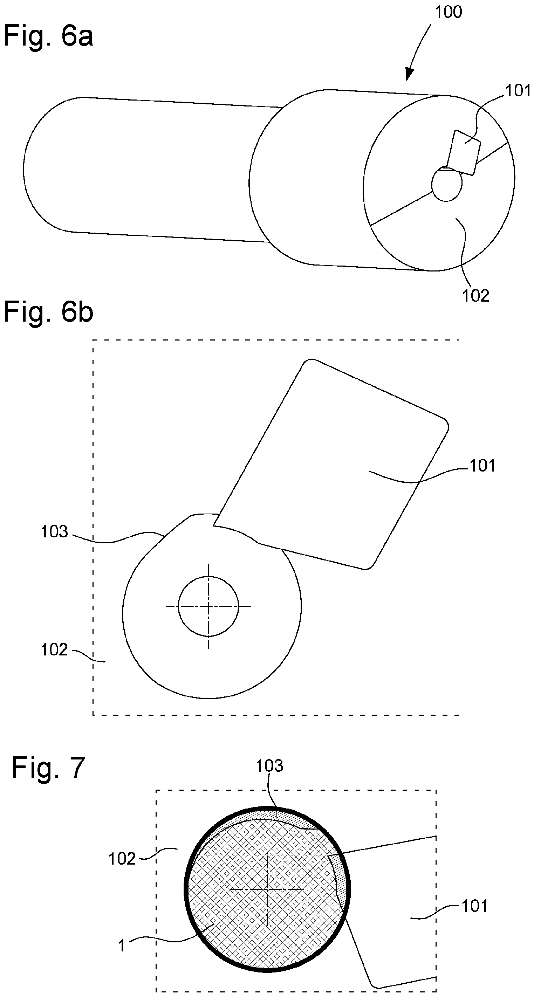

Comme on peut l'observer aux figures 6a et 6b, l'outil de brochage 100 est un outil de forme présentant une forme de découpe identique à la forme désirée de l'arbre de barillet.

Ainsi, l'outil 100 se présente en deux parties 101, 102 assemblées afin d'obtenir une géométrie « sans rayon » à l'intersection des deux parties de l'outil. La première partie 101 de l'outil se présente sous la forme d'une dent agencée pour usiner le dégagement 4 et la surface plane d'extrémité 20 du crochet 2.

La deuxième partie 102 de l'outil comprend une ouverture 103 dont le profil présente un premier secteur correspondant au crochet et un second secteur avec une première portion de section hélicoïdale et une deuxième portion de section cylindrique formant la surface d'appui 30 du ressort.

Le procédé de fabrication d'un arbre de barillet 1 selon l'invention comprend une première étape qui consiste à se munir d'une barre métallique ou en alliage métallique.

L'étape suivante, illustrée à la figure 3, consiste à décolleter la barre pour former au moins un premier diamètre comprenant une surface verticale et une surface horizontale pour former au moins un premier pivot 10 pour le pivotement dans un palier. D'autre surface de révolutions, telles que des portions cylindriques 11, 12 pour le pivotement d'un couvercle ou d'un tambour, peuvent aussi être formées lors de cette étape.

Ensuite, comme visible sur la figure 4, on place l'outil de brochage face à l'arbre de barillet, de manière que l'outil et l'arbre soient coaxiaux.

Enfin, comme illustré à la figure 5, on découpe le crochet 2, la surface d'appui 30, et le dégagement 4 au moyen de l'outil de brochage 100 présentant une forme de découpe identique à la forme désirée de la bonde 3 de l'arbre de barillet en effectuant plusieurs allers-retours en translatant selon l'axe A de l'outil qui est coaxial à l'axe de pivotement D de l'arbre 1.

De préférence, les allers-retours pour usiner l'arbre 1 sont effectués par passe de 0.2 mm.

Une fois le premier côté de l'arbre 1 usiné, ce dernier est retourné pour l'usiner à l'identique l'autre côté de l'arbre.

L'invention concerne également un arbre de barillet obtenu selon le procédé conforme à l'invention.

## Revendications

1. Procédé de fabrication d'un arbre de barillet (1) d'horlogerie agencé pour pivoter autour d'un axe de pivotement (D) et comprenant une bonde (3) comprenant une surface d'appui (30) pour une spire intérieure d'un ressort, surface d'appui (30) de laquelle fait saillie un crochet (2) destiné à être engagé dans un oeillet de la spire intérieure, la bonde (3) comprenant également, en amont du crochet (2) dans le sens d'enroulement (S) du ressort, un dégagement (4) destiné à recevoir l'extrémité du ressort, le procédé étant **caractérisé en ce qu'**il comprend les étapes suivantes :
- se munir d'une barre ;
- décolleter la barre pour former au moins une portion cylindrique (13) comprenant un surface verticale et une surface horizontale ;
- usiner la portion cylindrique (13) pour former la bonde qui comprend le crochet (2), la surface d'appui (30) et le dégagement (4), simultanément via un outil de brochage en effectuant plusieurs allers-retours en translation dans la direction de l'axe de pivotement (D) de l'arbre.

2. Procédé de fabrication d'un arbre de barillet (1) d'horlogerie selon la revendication 1, **caractérisé en ce que** les allers-retours sont effectués par passe de 0.2 mm.

3. Procédé de fabrication d'un arbre de barillet (1) d'horlogerie selon la revendication 1 ou 2, **caractérisé en ce que** la surface d'appui du ressort (30) comprend un secteur de section hélicoïdale (33) et un secteur de section cylindrique (34).

4. Procédé de fabrication d'un arbre de barillet (1) d'horlogerie selon l'une des revendications précédentes, **caractérisé en ce que** le dégagement (4) présente une surface courbe.

5. Procédé de fabrication d'un arbre de barillet (1) d'horlogerie selon l'une des revendications précédentes, **caractérisé en ce que** le matériau de l'arbre est choisi parmi les métaux ou les alliages métalliques.

6. Procédé de fabrication d'un arbre de barillet (1) d'horlogerie selon l'une des revendications précédentes, **caractérisé en ce que** la surface verticale (20) pour former le crochet (2) et la surface d'appui courbe (6) sont usinés simultanément par le même outil de brochage.

7. Procédé de fabrication d'un arbre de barillet (1) d'horlogerie selon l'une des revendications précédentes, **caractérisé en ce que** l'outil de brochage est outil de forme présentant une forme de découpe identique à la forme désirée de l'arbre de barillet.

8. Arbre de barillet obtenu par le procédé selon l'une des revendications 1 à 7.
